# EUROPEAN PATENT APPLICATION

(11) **EP 4 753 048 A1**
(43) Date of publication of application: **03.06.2026**
(21) Application number: 25762402.3
(22) Date of filing: 27.02.2025
(51) Int. Cl.: H01M 50/258, H01M 10/6556, H01M 50/296, H01M 50/224, B23K 1/00, B23K 9/00

(54) **BATTERY PACK CASE, BATTERY PACK, AND BATTERY DEVICE INCLUDING SAME**

(30) Priority: 29.02.2024 KR 20240029976
(71) Applicant: LG Energy Solution, Ltd., Seoul 07335 (KR)
(72) Inventor: LEE, Yoonhee, Daejeon 34122 (KR); HONG, Minseok, Daejeon 34122 (KR)
(74) Representative: Plasseraud IP
(86) International application number: PCT/KR2025/002777
(87) International publication number: WO 2025/183485

(57) **Abstract**

A battery pack according to various embodiments comprises: a cell assembly including a plurality of battery cells; and a battery pack case that accommodates the cell assembly, wherein the battery pack case includes: a lower frame; and a plurality of side frames extending from the lower frame in a substantially vertical direction, and the plurality of side frames may be configured as a combination of: a first side frame including a first flange and a second flange respectively protruding from the upper portion and the lower portion thereof toward the outside of the battery pack case; and a second side frame having one corner at least partially in contact with the first side frame and including a third flange protruding from the upper portion thereof toward the outside of the battery pack case. Other embodiments are possible.

## Description

### Technical Field

The present disclosure relates to a battery pack case having a stack-coupling structure and a battery device including the same.

### Background Art

Secondary batteries may be charged and discharged, and thus, are widely utilized in mobile devices such as a digital camera, a mobile phone, and a laptop, and in particular, have recently emerged as an energy source of an electric vehicle or an energy storage system (ESS).

As the electric vehicle or the ESS demands large-capacity and high-output power, a large-capacity battery device is widely used, in which a plurality of battery modules or battery packs with multiple secondary batteries (battery cells) accommodated within a housing are connected.

In particular, for large vehicles such as a commercial vehicle, large-capacity energy sources are required to drive a vehicle for long distance, and thus, a battery device in which multiple battery packs are connected is applied.

In such a battery device as an example applied to large vehicles, a manner of fixing each of multiple battery packs to a vehicle and electrically connecting the battery packs to each other to constitute an entire battery device may be applied.

### Detailed Description of the Invention

### Technical Goals

However, in existing arts, a fixing device in a complex and irregular form is required to fix each battery pack, and a problem of decreasing energy density per unit volume in a battery device due to gaps generated between battery packs may occur.

Various example embodiments of the present disclosure are conceived to address the existing problem as described above and intended to provide a structure that may maximize energy density by reducing a wasted space in a battery device composed of one or more battery packs and may stack and couple multiple battery packs rapidly and stably.

The example embodiments are not limited to the technical goals described above, and other technical goals may be inferred from the example embodiments below.

### Technical solutions

According to various example embodiments, provided is a battery pack including a cell assembly including a plurality of battery cells and a battery pack case in which the cell assembly is accommodated, and the battery pack case may include a lower frame and a plurality of side frames formed to extend in a direction substantially perpendicular to the lower frame, and the plurality of side frames may include a combination of a first side frame including a first flange protruding from an upper portion and a second flange protruding from a lower portion, toward an outside of the battery pack case, and a second side frame having an edge configured to be at least partially in contact with the first side frame and including a third flange protruding from an upper portion toward the outside of the battery pack case.

According to various example embodiments, provided is a battery pack case configured to accommodate a cell assembly including a plurality of battery cells, the battery pack case including a lower frame and a plurality of side frames connected in a direction perpendicular to the lower frame, and the plurality of side frames may include a first side frame including a first flange formed to protrude from an upper portion and a second flange formed to protrude from a lower portion, toward an outside of the battery pack case, and a second side frame having an edge configured to be at least partially in contact with the first side frame and including a third flange formed to protrude from an upper portion toward the outside of the battery pack case.

### Effects of the Invention

According to various example embodiments of the present disclosure, it is possible to provide a battery device that efficiently arranges components used for the battery device and maximizes energy density by minimizing a wasted space in the battery device having a structure that may stack and couple multiple battery packs.

In addition, it is possible to provide a battery device that may secure structural stability while stacking and coupling a plurality of battery packs rapidly and easily.

In addition, it is possible to not only reduce components by cooling a cell assembly using a lower frame of a battery pack case that may be stacked and coupled but also obtain an effect of cooling a cell assembly of another adjacent battery pack (for example, a battery pack stacked and disposed below).

Effects of example embodiments are not limited to those described above, and other effects not mentioned herein may be clearly understood by those skilled in the art from the appended claims.

### Brief Description of Drawings

FIG. 1 is a schematic perspective view of a battery device according to an example embodiment of the present disclosure.
FIG. 2 is a schematic exploded perspective view of a battery device according to an example embodiment of the present disclosure.
FIG. 3 is a schematic exploded perspective view of a battery pack according to an example embodiment of the present disclosure.
FIG. 4 is a schematic exploded perspective view of a lower frame of a battery pack case according to an example embodiment of the present disclosure.
FIGS. 5A to 5C are partial cross-sectional views of a battery pack case according to various example embodiments of the present disclosure.
FIGS. 6A and 6B are partial cross-sectional views of a battery pack case according to an example embodiment of the present disclosure.
FIG. 7 is a diagram for illustrating a vehicle including a battery pack or a battery device according to an example embodiment of the present disclosure.

### Mode for Carrying Out the Invention

Prior to the detailed description of the present disclosure, the words and terminologies used in the specification and claims are not to be construed as limited to common or dictionary meanings but construed as meanings and concepts coinciding with the technical idea of the present disclosure based on the principle that the inventor may appropriately define the concept of terms to explain his or her own disclosure in the best way. Therefore, the example embodiments described herein and the configurations illustrated in the drawings are only exemplary embodiments of the present disclosure and do not fully cover the technical idea of the present disclosure, and thus, it should be understood that various alternative equivalents and modification examples may be present when this application is filed.

Identical reference numerals or signs indicated in each drawing appended to the specification may refer to components or elements performing substantially identical functions. For convenience of description and understanding, the same reference numeral or sign may be used for description in different example embodiments. In other words, even though elements with the same reference numeral are illustrated in a plurality of drawings, not all of the plurality of drawings may represent a single example embodiment.

In the following description, a singular expression includes a plural expression unless apparently otherwise defined by context. It should be understood that terms such as "comprise or include" and "configure" are intended to indicate the presence of a feature, a number, a step, an operation, an element, a component, or a combination thereof described in the specification and not intended to exclude the possibility of the presence or addition of one or more other features, numbers, steps, operations, elements, components, or combinations thereof in advance.

In addition, expressions such as above, upper portion, below, lower portion, side surface, front surface, and rear surface are represented herein with respect to a direction illustrated in a drawing and may be represented otherwise when the direction of a corresponding object changes.

Further, terms including ordinal numbers such as "first" and "second" may be used to differentiate between elements in the specification and claims. These ordinal numbers may be used to differentiate identical or similar elements from each other, and the use of the ordinal numbers may not limit the meanings of terms. As an example, a using order or an arrangement sequence of an element combined with an ordinal number is not to be construed as limited by the ordinal number. In some cases, each ordinal number may also be used to replace each other.

Hereinafter, example embodiments of the present disclosure are described with reference to the accompanying drawings. However, the present disclosure is not limited to the example embodiments described below. For example, a person of ordinary skill in the art who understands the idea of the present disclosure may provide other example embodiments included within the scope of the idea of the present disclosure by adding, changing, or removing an element, which are also included within the scope of the present disclosure though. The shapes and sizes of elements may be exaggerated in the drawings for clearer description.

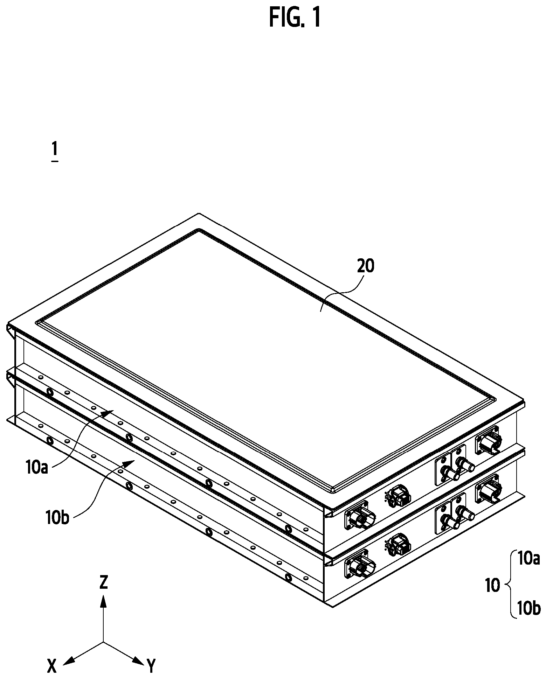

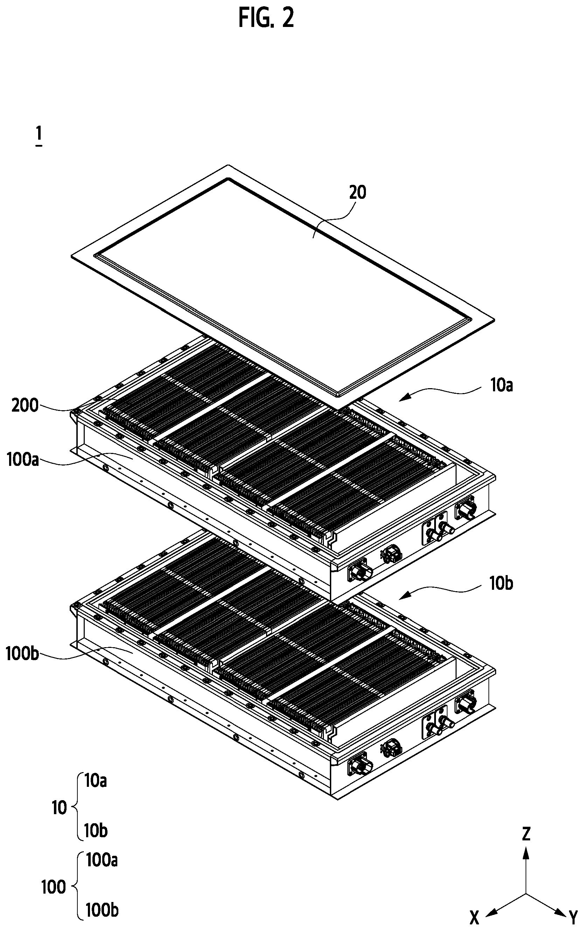

FIG. 1 is a schematic perspective view of a battery device 1 according to an example embodiment of the present disclosure. FIG. 2 is a schematic exploded perspective view of the battery device 1 according to an example embodiment of the present disclosure.

Referring to FIGS. 1 and 2, the battery device 1 according to various example embodiments may include at least one battery pack 10 that may be stacked and coupled along a direction (for example, an Z-axis direction).

Each battery pack 10 may include a cell assembly 200 including a plurality of battery cells and a pack case 100 in which the cell assembly 200 is accommodated.

Each battery pack 10 constituting the battery device 1 in various example embodiments of the present disclosure may have an identical structure and form. For example, a user (or a fabricator) may easily determine a quantity of the battery pack 10 to be applied to a device in response to an amount of power or a size required for each device and may implement the battery device 1 as a whole by stacking and coupling a plurality of battery packs 10 of an appropriate quantity.

For example, as illustrated in FIG. 1, the plurality of battery packs 10 may include a first battery pack 10a and a second battery pack 10b, which are stacked and coupled along a direction (for example, the Z direction). In this case, the first battery pack 10a and the second battery pack 10b may have an identical structure.

Meanwhile, unlike what is illustrated in FIGS. 1 and 2, the battery device 1 according to various example embodiments of the present disclosure may have a form of three or more battery packs 10 stacked along a direction or may be composed of a single battery pack 10. However, even in this case, each battery pack 10 may have a structure that may be stacked based on the needs of the user.

As an example, in each battery pack 10 constituting the battery device 1, the battery pack case 100 may have a structure in which an upper portion thereof is open.

For example, an open upper portion of one battery pack 10 (for example, the second battery pack 10b of FIGS. 1 and 2) may be covered through a surface (for example, a lower frame) of the battery pack case 100 of another battery pack 10 (for example, the first battery pack 10a of FIGS. 1 and 2) stacked above and coupled thereto.

Meanwhile, if no other battery pack 10 is stacked above the battery pack 10, which is, in other words, an uppermost battery pack 10, an open upper portion thereof may be covered by a separate member, for example, an upper cover 20.

For example, a second pack case 100b of the second battery pack 10b may be provided as a structure in which an internal space thereof is open upward without a separate cover member for covering the internal space. The internal space of the second pack case 100b open upward as described above may be closed by a first pack case 100a of the first battery pack 10a stacked on the second battery pack 10b. In other words, as the first pack case 100a is stacked above the second pack case 100b, a bottom surface of the first pack case 100a may come into close contact with an upper portion of the second pack case 100b to close the internal space of the second pack case 100b.

As described above, while the plurality of battery packs 10 are stacked and coupled, one battery pack 10 may close an internal space of another battery pack 10 disposed thereunder, and thus, a separate cover member may be omitted for the battery packs 10 other than the uppermost battery pack 10.

According to various example embodiments of the present disclosure, a structure of the battery device 1 may be further simplified through the stacked structure described above, and the total energy density of the battery device 1 may be maximized by coupling the plurality of battery packs 10 through close contact.

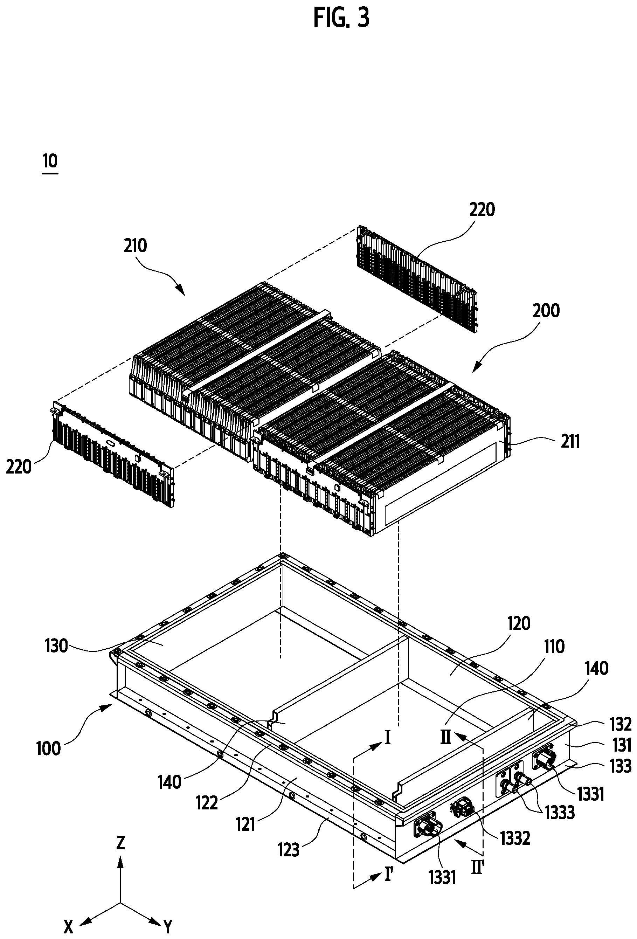

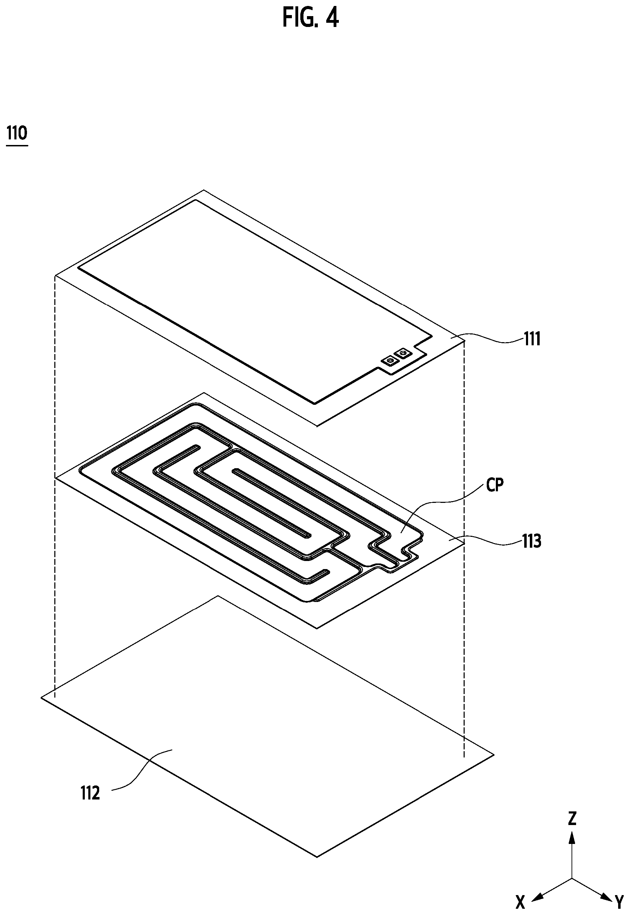

Hereinafter, with reference to FIGS. 3 and 4, the battery pack 10 included in the battery device 1 according to example embodiments is described in detail.

FIG. 3 is a schematic exploded perspective view of the battery pack 10 according to an example embodiment of the present disclosure. FIG. 4 is a schematic exploded perspective view illustrating each plate constituting a lower frame 110 of the battery pack case 100 according to an example embodiment of the present disclosure.

For example, the battery pack 10 of FIG. 3 and the lower frame 110 of the battery pack case 100 of FIG. 4 may be understood as some of the components of the battery device 1 illustrated in FIGS. 1 and 2.

According to various example embodiments, the battery pack 10 may include the cell assembly 200 and the battery pack case 100 accommodating at least one cell assembly 200 in an inner space thereof.

The cell assembly 200 may include a battery cell stack 210 (or a battery cell unit) composed of a plurality of battery cells 211. For example, the battery cells 211 may be stacked along a direction (for example, a Y-axis direction of FIG. 3) to form the battery cell stack 210. Meanwhile, the cell assembly 200 may further include a busbar assembly 220 electrically connecting each of the battery cells 211.

In an example embodiment, each battery cell 211 may include a pouch-type secondary battery having a structure in which an electrode assembly is accommodated within a pouch. In this case, the electrode assembly and electrolyte may be accommodated within the pouch formed by forming one sheet or a plurality of exterior materials. However, each battery cell 211 that may be included in the cell assembly 200 according to various example embodiments is not limited to the pouch-type secondary battery. For example, the battery cells 211 according to various example embodiments may be a prismatic secondary battery or a cylindrical secondary battery to form the cell assembly 200.

Meanwhile, the cell stack 210 may include a protective member for protecting the plurality of battery cells 211. For example, the protective member may include a surface pressure pad that may apply a predetermined surface pressure to the battery cell 211 in order to minimize an issue caused by a swelling phenomenon indicating that each battery cell 211 swells up in charging and discharging processes. As another example, the protective member may include a heat insulation sheet for blocking the spread of high-temperature heat energy or flames generated in a specific battery cell 211 to other adjacent components.

The busbar assembly 220 may include a plurality of conductive busbars electrically connected to the battery cell 211 and a busbar frame supporting the conductive busbars. The busbar assembly 220 may face at least one side of the cell stack 210. For example, as illustrated in FIG. 3, the busbar assembly 220 may be provided as a pair, each of which may be disposed to face the cell stack 210 in a length direction (for example, an X-axis direction of FIG. 3) of the battery cell 211.

Meanwhile, in various example embodiments, the cell assembly 200 may further include an insulation cover disposed between the busbar assembly 220 and the pack case 100. For example, the insulation cover may perform the role of protecting the busbar assembly 220 and preventing a short circuit that may occur between a busbar and the pack case 100.

The battery pack 10 according to various example embodiments of the present disclosure may have a structure known as a cell to pack (CTP) type, in which each cell assembly 200 may be directly accommodated in the pack case 100 without a separate module case surrounding the cell assembly 200. In this case, as a module case is removed, a loss caused by a space occupied by an existing module case and assembly tolerance may be minimized, and accordingly, more battery cells may be mounted or a larger battery cell may be placed, which may lead to an effect of increasing the energy density of the battery pack 10.

The battery pack case 100 may accommodate one or more cell assemblies 200 in an internal space thereof. For example, the battery pack case 100 may include the lower frame 110 on which at least one cell assembly 200 is seated and a plurality of side frames (for example, a first side frame 120 and a second side frame 130) coupled to the lower frame 110 to form a side surface of the pack case 100.

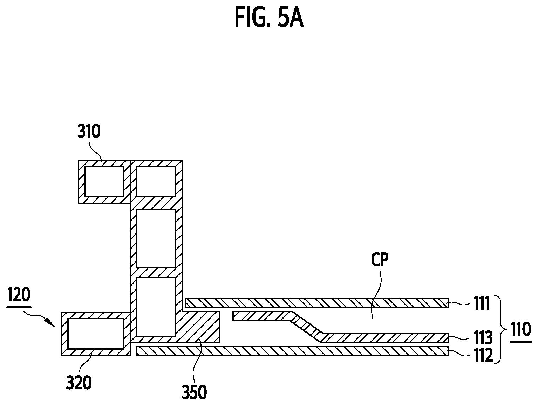

Hereinafter, with reference to FIGS. 5A to 6B together, in addition to FIGS. 3 and 4, the battery pack case 100 according to various example embodiments of the present disclosure is described in detail.

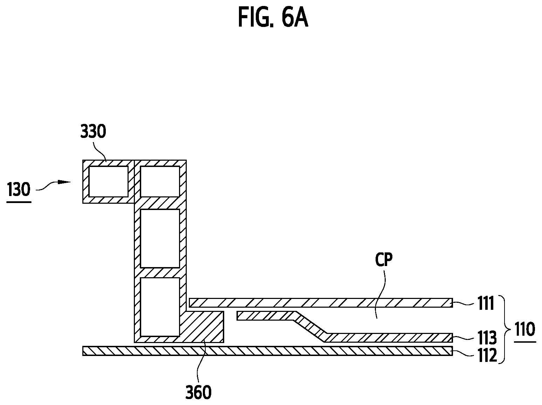

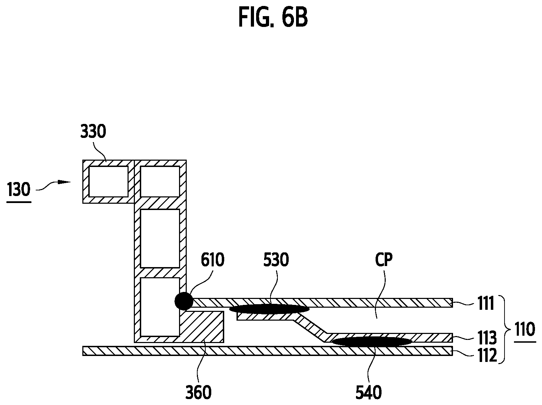

Each of FIGS. 5A to 6B is a partial cross-sectional view of the battery pack case 100 according to various example embodiments of the present disclosure. Specifically, FIGS. 5A to 5C are schematic side cross-sectional views of the first side frame 120 of the battery pack case 100 of FIG. 3 taken along line I-I'. FIGS. 6A and 6B are schematic side cross-sectional views taken along line II-II' of FIG. 3.

The lower frame 110 of the battery pack case 100 may be in a form of a plurality of plates coupled to each other.

For example, the lower frame 110 according to various example embodiments of the present disclosure may include a first lower plate 112 forming an outermost bottom surface of the battery pack 10, a second lower plate 111 forming an inner bottom surface of the battery pack 10 and facing the cell assembly 200, and a cooling plate 113 interposed between the first lower plate 112 and the second lower plate 111 and provided with a predetermined uneven structure to form a space for a flow path CP through which a coolant may flow.

As the lower frame 110 includes the flow path CP of the coolant inside, which may cool the cell assembly 200, and is composed of three layers in an example embodiment of the present disclosure, effects of maximizing space utilization, reducing manufacturing costs, and decreasing a weight of the battery device 1 may be obtained, compared to a case where a component for cooling the cell assembly 200 is provided separately from the lower frame 110 of the battery pack case 100. Furthermore, as only one layer is disposed between the flow path CP of the coolant provided within the lower frame 110 and the cell assembly 200 of another battery pack 10 (for example, the battery pack 10b of FIG. 1) stacked under and coupled to the corresponding battery pack 10, an additional effect of cooling the cell assembly 200 of the another battery pack 10 may be obtained.

Meanwhile, the coolant provided to flow along the flow path CP for cooling may flow into the flow path CP for cooling through a cooling port 1333 (see FIG. 3) provided at a side of the battery pack case 100. The coolant may circulate in a manner of cooling one or more cell assemblies 200 mounted on the battery pack case 100 while flowing along the flow path CP for cooling and then exiting to the outside of the pack case 100 through the cooling port 1333.

The plates 111, 112, and 113 constituting the lower frame 110 may be different from each other in size or shape. For example, the first lower plate 112 forming the outermost bottom surface of the battery pack case 100 may have a larger size than the second lower plate 111. Accordingly, the cell assembly 200 may be stably supported, and an input of foreign substances from outside through a lower surface of the battery pack 10 may be effectively blocked.

The plurality of side frames 120 and 130 may be disposed above the lower frame 110. For example, the side frames 120 and 130 may be formed to extend toward a direction (for example, the Z-axis direction of FIG. 3) perpendicular to the lower frame 110 and may protect a side portion of the cell assembly 200 and increase stiffness in a height direction (for example, the Z-axis direction) of the battery pack 10.

Meanwhile, the side frames 120 and 130 constituting the side surface of the battery pack case 100 may include the first side frame 120 and the second side frame 130 having different shapes.

The first side frame 120 and the second side frame 130 may be disposed to be adjacent so that one edge of each frame is at least partially in contact to form different side surfaces of the battery pack case 100. For example, the first side frames 120 provided in one battery pack case 100 may be located in parallel to each other, and similarly, the second side frames 130 provided in one battery pack case 100 may be located in a direction parallel to each other. For example, the second side frames 130 may correspond to side frames at a front end and a back end of the battery pack 10.

For example, as illustrated in FIGS. 5A to 5C, the first side frame 120 of the battery pack case 100 according to an example embodiment of the present disclosure may include a first flange 310 formed to protrude from an upper portion thereof and a second flange 320 formed to protrude from a lower portion thereof, in a direction toward the outside of the battery pack 10 (or the battery pack case 100).

The first flange 310 and the second flange 320 may function as a coupling surface or a support surface when the corresponding battery pack 10 overlaps with and is coupled to another adjacent battery pack 10.

For example, the second flange 320 of the battery pack 10 (for example, the first battery pack 10a of FIG. 1) disposed above among two adjacent battery packs 10 may be coupled to the first flange 310 of the battery pack 10 (for example, the second battery pack 10b of FIG. 1) disposed below to form a stack-coupling structure of the two battery packs 10.

In addition, the first flange 310 of the battery pack 10 (for example, the second battery pack 10b of FIG. 1) disposed below may perform a role of supporting a load of another battery pack 10 (for example, the first battery pack 10a of FIG. 1) disposed above the corresponding battery pack 10 to be stacked and coupled thereto in a vertical direction.

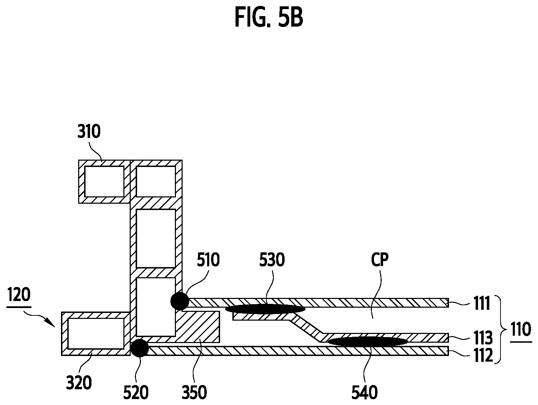

Meanwhile, in the battery pack case 100 according to an example embodiment as illustrated in FIGS. 5A and 5B, the second flange 320 of the first side frame 120 may protrude further in an outward direction to have a larger width than the first flange 310. Accordingly, a floor support area of the battery pack case 100 may increase to ensure stability in a stacked structure of the battery pack 10.

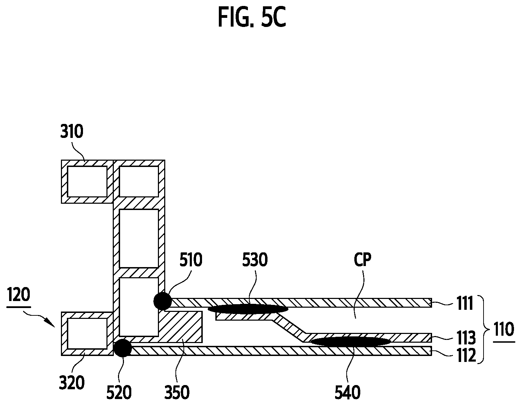

In contrast, as illustrated in FIG. 5C, in the battery pack case 100 according to another example embodiment, the first flange 310 and the second flange 320 of the first side frame 120 may be configured to have substantially equal widths with each other. In this case, since the flanges at the upper portion and the lower portion of the first side frame 120 are equal in width, there may be an advantage of stacking and coupling the battery packs 10 more compactly to be accommodated in the battery device 1.

Next, as illustrated in FIGS. 6A and 6B, the second side frame 130 of the battery pack case 100 according to an example embodiment of the present disclosure may include a third flange 330 formed to protrude from an upper portion thereof in a direction toward the outside of the battery pack 10 (or the battery pack case 100). In contrast with the first side frame 120, the second side frame 130 may not be provided with a separate flange at a lower portion thereof.

Accordingly, the third flange 330 formed at the upper portion of the second side frame 130 may be disposed to face a portion of the lower frame 110 (for example, a portion of the first lower plate 112 forming the outermost bottom surface of the lower frame 110) with each other. In this case, the portion of the lower frame 110 facing the third flange 300 may have a structure extended toward the second side frame 130 to provide a larger width than the second lower plate 111, in order to secure structural stability by increasing a support area of the battery pack 10.

Meanwhile, as the second side frame 130 is not provided with a separate flange at the lower portion thereof as illustrated in FIGS. 6A and 6B, a space between the third flange 330 and the lower frame 110 (for example, the first lower plate 112 of the lower frame 110) facing each other may be utilized to place predetermined components in the space.

For example, at least one component among a power port 1331, a signal port 1332, and the cooling port 1333 may be disposed in at least a portion of the second side frame 130. As an example, a power port (or a terminal) for electrically connecting the cell assembly 200 to the outside may be disposed in the space between the third flange 330 and the lower frame 110.

In addition, the battery pack case 100 may further include one or more cross frames 140 disposed above the lower frame 110 to divide an internal space of the battery pack case 100. The cross frame 140 may be connected to the lower frame 110. For example, the cross frame 140 may be disposed between the side frames 120 and 130 to cross an upper surface of the lower frame 110.

The cross frame 140 may divide the internal space of the pack case 100 into a plurality of accommodating spaces. One or more cell assemblies 200 or a control module for controlling the cell assembly 200 may be disposed in each of the accommodating spaces divided by the cross frame 140.

According to various example embodiments of the present disclosure, at least one of the lower frame 110, the plurality of side frames 120 and 130, and the cross frame 140 constituting the battery pack case 100 may be formed of a metal material having high strength to protect the battery cells 211 and secure the structural stability of the battery device 1. For example, at least a portion of the lower frame 110 and the side frames 120 and 130 may be composed of aluminum or an alloy including aluminum.

Meanwhile, in an example embodiment, the plurality of side frames 120 and 130 may be formed of a material with higher strength than the lower frame 110. For example, the side frames 120 and 130 may be formed of a material of 6000 series aluminum alloy, and the lower frame 110 may be formed of a material of 3000 series aluminum alloy.

Further, as illustrated in FIGS. 5B, 5C, and 6B, in the battery pack case 100 according to various example embodiments of the present disclosure, the first side frame 120 may be bonded to each of the first lower plate 112 and the second lower plate 111 in a first welding manner (for example, a cold metal transfer (CMT) welding manner), and the second side frame 130 may be bonded to the second lower plate 111 in the first welding manner (for example, the CMT welding manner) and configured not to be bonded to the first lower plate 112 in a separate welding manner.

Meanwhile, the cooling plate 113 may be bonded to each of the first lower plate 112 and the second lower plate 111 in a second welding manner (for example, a brazing manner) different from the first welding manner.

Accordingly, in various example embodiments of the present disclosure, a process of directly coupling the second side frame 130 to the first lower plate 112 and the cooling plate 113 of the lower frame 110 may be omitted.

Each of the first side frame 120 and the second side frame 130 may include a protrusion (for example, a first protrusion 350 or a second protrusion 360) protruding toward the inside of the battery pack case 100. The protrusions 350 and 360 may be disposed in a space between the first lower plate 111 and the second lower plate 112. In particular, the protrusions 350 and 360 may be configured to be in contact with the first lower plate 111 and the second lower plate 112 to contribute to a fixing structure between the side frames 120 and 130 and the lower frame 110 when the side frames 120 and 130 are inserted into the space between the two lower plates 111 and 112.

For example, a problem of a gap generated at upper ends of the side frames 120 and 130 due to an upwardly open structure of the battery pack case 100 may be minimized, and a contact area sufficient to perform the welding described above may be provided. In addition, the protrusions 350 and 360 may minimize a reduction in stiffness caused by a cooling structure and an integrated structure of the lower frame of the present disclosure, in particular, a reduction in stiffness at an outer area of the lower frame 110. Meanwhile, unlike what is illustrated, the protrusions 350 and 360 may form a hollow structure similarly to other areas of the side frames 120 and 130 to contribute to the manufacturing ease and weight reduction of the side frames 120 and 130 and secure sufficient stiffness.

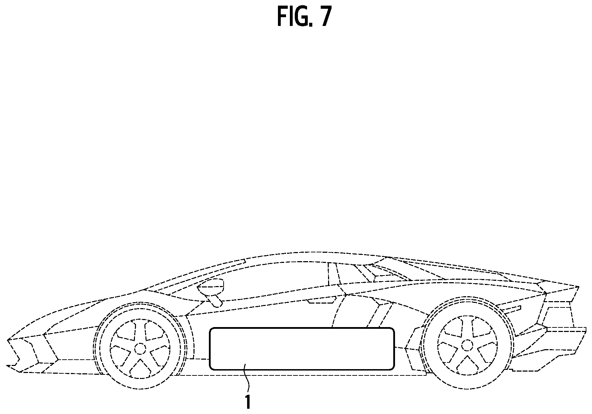

FIG. 7 is a diagram for illustrating a vehicle 1000 including the battery pack 10 (or the battery device 1 provided with the battery packs 10) according to various example embodiments of the present disclosure.

Referring to FIG. 7, the vehicle 1000 according to various example embodiments may include at least one of the battery pack 10 according to various example embodiments of the present disclosure and the battery device 1 with a form of stacking and coupling the plurality of battery packs 10.

In the battery device 1 according to various example embodiments of the present disclosure, a separate cover member for covering each of the battery packs 10 may be omitted, and any one battery pack 10 may be configured to cover and seal an upper portion of another battery pack 10 disposed thereunder.

Accordingly, in the battery device 1 composed of the plurality of battery packs 10, a wasted space between the battery packs 10 may decrease, which may increase energy density.

In addition, in coupling between the plurality of battery packs 10 stacked in a direction (for example, vertically or in the Z direction of FIG. 1), the side frames 120 and 130 of the battery pack 10 disposed above and the side frames 120 and 130 of the battery pack 10 disposed below may be coupled based on flanges provided in each side frame 120 and 130. Meanwhile, as the second side frame 130 corresponding to a front surface or a rear surface of the battery pack 10 or the battery device 1 is not provided with a flange at the lower portion thereof, usability may increase in terms of space arrangement.

Furthermore, the battery device 1 according to example embodiments may be fabricated from multiple standardized battery packs 10 stacked, and accordingly, the battery device 1 with various capacities and sizes may be rapidly fabricated.

In particular, the battery device 1 according to example embodiments may have an integrated structure of the multiple battery packs 10 and high sealing capability and structural stability, and thus, may be variously used in large electric vehicles including a commercial vehicle requiring a large-capacity energy storage device.

While various example embodiments of the present disclosure are described above in detail, the scope of the present disclosure is not limited thereto, and it will be apparent to those of ordinary skill in the art that various modifications and variations may be made without departing from the technical idea of the present disclosure as defined by the appended claims. In addition, the aforementioned example embodiments may be implemented with some elements removed, and each example embodiment may be implemented in combination with each other.

## Claims

1. A battery pack comprising:
a cell assembly including a plurality of battery cells; and
a battery pack case in which the cell assembly is accommodated,
wherein the battery pack case comprises:
a lower frame; and
a plurality of side frames formed to extend in a direction substantially perpendicular to the lower frame, and
wherein the plurality of side frames comprise a combination of:
a first side frame including a first flange protruding from an upper portion and a second flange protruding from a lower portion, toward an outside of the battery pack case; and
a second side frame having an edge configured to be at least partially in contact with the first side frame and including a third flange protruding from an upper portion toward the outside of the battery pack case.

2. The battery pack of claim 1,
wherein, within the lower frame,
a flow path of a coolant for cooling the cell assembly is included.

3. The battery pack of claim 1,
wherein the lower frame includes:
a first lower plate forming an outer bottom surface;
a second lower plate forming an inner bottom surface; and
a cooling plate interposed between the first lower plate and the second lower plate and provided with a predetermined uneven structure to form a space for a flow path of a coolant for cooling the cell assembly.

4. The battery pack of claim 3,
wherein the first side frame
is bonded to each of the first lower plate and the second lower plate in a first welding manner, and
wherein the second side frame
is bonded to the second lower plate in the first welding manner and is not bonded to the first lower plate in a welding manner.

5. The battery pack of claim 4,
wherein the cooling plate is bonded to each of the first lower plate and the second lower plate in a second welding manner different from the first welding manner.

6. The battery pack of claim 3,
wherein at least one of the plurality of side frames
includes a protrusion protruding toward an inside of the battery pack case.

7. The battery pack of claim 6,
wherein the protrusion is disposed at a space between the first lower plate and the second lower plate.

8. The battery pack of claim 1,
comprising a terminal configured to electrically connect the cell assembly to an outside,
wherein the third flange of the second side frame is disposed to face a portion of the lower frame, and
wherein the terminal is located at a space between the third flange and the lower frame facing each other.

9. The battery pack of claim 1,
wherein the plurality of side frames are formed of a material with higher strength than the lower frame.

10. The battery pack of claim 1,
wherein the battery pack case has a coupling structure to be stacked on and coupled to another battery pack along a direction through at least one of the first flange or the second flange.

11. A battery device provided with a plurality of battery packs, one of which is the battery pack according to claim 1, the plurality of battery packs stacked and coupled in a vertical direction, wherein a second flange of an upper battery pack among two adjacent battery packs is supported in the vertical direction by a first flange of a lower battery pack.

12. A battery pack case configured to accommodate a cell assembly including
a plurality of battery cells, the battery pack case comprising:
a lower frame; and
a plurality of side frames connected in a direction perpendicular to the lower frame, and
wherein the plurality of side frames comprise:
a first side frame including a first flange formed to protrude from an upper portion and a second flange formed to protrude from a lower portion, toward an outside of the battery pack case; and
a second side frame having an edge configured to be at least partially in contact with the first side frame and including a third flange formed to protrude from an upper portion toward the outside of the battery pack case.

13. The battery pack case of claim 12,
wherein the first flange and the second flange have substantially equal widths with each other.

14. The battery pack case of claim 12,
wherein the second flange is formed to protrude by a greater width than the first flange.

15. The battery pack case of claim 12,
wherein the second side frame
includes no flange formed to protrude from a lower portion toward the outside of the battery pack case, and
wherein the third flange is disposed to face a portion of the lower frame.
